# EUROPEAN PATENT SPECIFICATION

(11) **EP 3 565 681 B1**
(45) Date of publication and mention of the grant of the patent: **07.08.2024**
(21) Application number: 17791194.8
(22) Date of filing: 26.09.2017
(51) Int. Cl.: B22F 1/00, B22F 3/105, C22C 32/00, B23K 103/04, C21D 9/00, B22F 10/20, B22F 1/16, C22C 1/059, B33Y 70/10

(54) **CORE-SHELL ALLOY POWDER FOR ADDITIVE MANUFACTURING, AN ADDITIVE MANUFACTURING METHOD AND AN ADDITIVELY MANUFACTURED PRECIPITATION DISPERSION STRENGTHENED ALLOY COMPONENT**
KERN-SCHALE-LEGIERUNGSPULVER ZUR GENERATIVEN FERTIGUNG, VERFAHREN ZUR GENERATIVEN FERTIGUNG UND MITTELS GENERATIVER FERTIGUNG HERGESTELLTE FÄLLUNGSDISPERSIONSGEHÄRTETE LEGIERUNGSKOMPONENTE
POUDRE D'ALLIAGE À STRUCTURE COEUR-ÉCORCE POUR FABRICATION ADDITIVE, PROCÉDÉ DE FABRICATION ADDITIVE ET COMPOSANT D'ALLIAGE RENFORCÉ PAR DISPERSION PRÉCIPITATION FABRIQUÉ DE MANIÈRE ADDITIVE

(30) Priority: 06.01.2017 US 201715399832
(43) Date of publication of application: 13.11.2019
(73) Proprietor: General Electric Company, Schenectady, NY 12345 (US)
(72) Inventor: LOU, Xiaoyuan, Niskayuna, NY 12309 (US); MORRA, Martin, Matthew, Niskayuna, NY 12309 (US)
(74) Representative: Hafner & Kohl PartmbB
(86) International application number: PCT/US2017/053394
(87) International publication number: WO 2018/128656

(56) References cited:
- EP-A2- 2 857 125
- WO-A1-2015/105735
- WO-A1-2015/106113
- US-A1- 2009 317 557

## Description

### BACKGROUND

The embodiments of the specification relate to precipitation dispersion strengthened alloys, and more particularly the embodiments of the specification relate to oxide or nitride precipitation dispersion strengthened alloys having nano-sized oxide or nitride precipitates and methods of making the same.

A conventional process for making oxide dispersion strengthened (ODS) or nitride dispersion strengthened alloys is based on mixing of nano-sized oxide or nitride particles with metallic alloy powders using mechanical ball milling processes, followed by hot consolidation of the mixture to form a body. Occasionally these milled powder mixtures having the metal alloy powders and nano-sized oxide or nitride particles are used for laser or electron beam powder bed additive manufacturing to form components having complex geometries. However, laser or electron beam melting and solidification of these milled powder mixtures typically results in undesirable coarsening, agglomeration, non-uniform distribution of the pre-processed nano-sized oxide or nitride particles.

Accordingly, components that are additively manufactured using the milled powder mixtures having the nano-sized oxide or nitride particles, generally have large, agglomerated, and non-uniformly distributed particles that are formed during and/or after the laser or electron beam processes associated with the additive manufacturing. These large, agglomerated, and non-uniformly distributed particles formed during and/or after the additive manufacturing process adversely affect physical properties of the components, and hence are not desirable. In addition, conventionally used ball milling processes are time consuming and expensive. Moreover, powder quality of the ball milled powders may not be reliable and replicable for large scale powder production.

WO 2015/106113 A1 discloses a material for forming a part using a manufacturing system. The material includes a plurality of discrete particles.

US 2009/317557 A1 discloses a process for making a composite material that contains core-shell structured nanoparticles.

EP 2 857 125 A2 discloses a method of forming a oxide dispersion-strengthened alloy metal.

### BRIEF DESCRIPTION

The invention is defined by the appended claims.

According to the invention, a method for additively manufacturing a precipitation dispersion strengthened alloy component comprising nano-sized precipitates of oxides, nitrides or both dispersed in a metal alloy based matrix is proposed in accordance with claim 1. The method comprises providing a core-shell structured alloy powder, and additively manufacturing the alloy component using a laser or electron beam based powder bed process. The method further comprises heat treating the component to optimize the nano-sized precipitates of the oxides, nitrides, or both. The nano-sized precipitates are formed in-situ in the component during additive manufacturing, heat treating the component, or both.

### DRAWINGS

These and other features and aspects of embodiments of the invention will become better understood when the following detailed description is read with reference to the accompanying drawings in which like characters represent like parts throughout the drawings, wherein:
FIG. 1 illustrates a schematic view of an example core-shell structure of a core-shell structured alloy powder used for additive manufacturing, in accordance with embodiments of the present specification;
FIG. 2 illustrates a transmission electron image of an oxide precipitation dispersion strengthened stainless steel having nano-sized silicon oxide, in accordance with embodiments of the present specification;
FIG. 3 is a backscattered electron image of an oxide precipitation dispersion strengthened stainless steel having nano-sized yttrium and titanium oxide, in accordance with embodiments of the present specification;
FIG. 4 is a backscattered electron image of an oxide dispersion strengthened stainless steel having nano-sized hafnium, yttrium and titanium oxide, in accordance with embodiments of the present specification; and
FIG. 5 is a flow chart of an example method of making an oxide or nitride precipitation dispersion strengthened alloy having nano-sized precipitates of an oxide, a nitride, or both, in accordance with embodiments of the present specification.

### DETAILED DESCRIPTION

Various embodiments disclose core-shell structured alloy powders having particles with core-shell structure. The core-shell structured alloy powders are used to produce precipitation dispersion strengthened alloys having nano-sized precipitates of an oxide, a nitride, or both by powder bed additive manufacturing, such as a laser or electron beam based powder bed additive manufacturing. In certain embodiments, a core-shell structured alloy powder comprises an alloy powder core and an oxygen or nitrogen rich shell disposed on at least a portion of the alloy powder core. The alloy powder core comprises an alloy constituent matrix having one or more reactive elements. The reactive elements are configured to react with oxygen, nitrogen, or both. The alloy constituent matrix comprises stainless steel, an iron based alloy, a nickel based alloy, a nickel-iron based alloy, a cobalt based alloy, a copper based alloy, an aluminum based alloy, a titanium based alloy, or combinations thereof. Non-limiting examples of the stainless steel in the alloy constituent matrix includes austenitic stainless steel, ferritic stainless steel, duplex stainless steel, martensitic stainless steel, or the like, or combinations thereof. In some embodiments, the reactive elements may be present in a range from about 0.01 weight percent to 10 weight percent of a total weight of the alloy powder.

During additive manufacturing process or subsequent heat treatment processes that may be performed after the additive manufacturing process, the core-shell structured alloy powder provides a precipitation dispersion strengthened alloy comprising nano-sized precipitates of an oxide, a nitride, or both uniformly dispersed in the metal alloy based matrix. In certain embodiments, the nano-sized precipitates may be present intergranularly, intragranularly, or both in the metal alloy based matrix. The nano-sized precipitates comprise *in-situ* formed oxide, nitride, or both. In certain embodiments, a volume fraction of the nano-sized precipitates in the precipitation dispersion strengthened alloys is in a range from 0.1 percent to 40 percent for nano-sized precipitates.

In some embodiments, methods of making the precipitation dispersion strengthened alloys and components of the precipitation dispersion strengthened alloys include powder bed fusion processes based on electron beam or laser beam melting techniques. In the present specification, oxidation or nitridation nature of determined reactive elements enables formation of nano-sized oxide precipitates, nano-sized nitride precipitates, or both in the alloys during laser or electron beam melting process of the additive manufacturing and post heat treatments. Advantageously, the components formed using the core-shell structures alloy powders and additive manufacturing methods of the present specification exhibit enhanced mechanical properties, irradiation resistance. Further, the additively manufactured components of the present specification are manufactured at lower manufacturing cost as compared to their conventional counterparts.

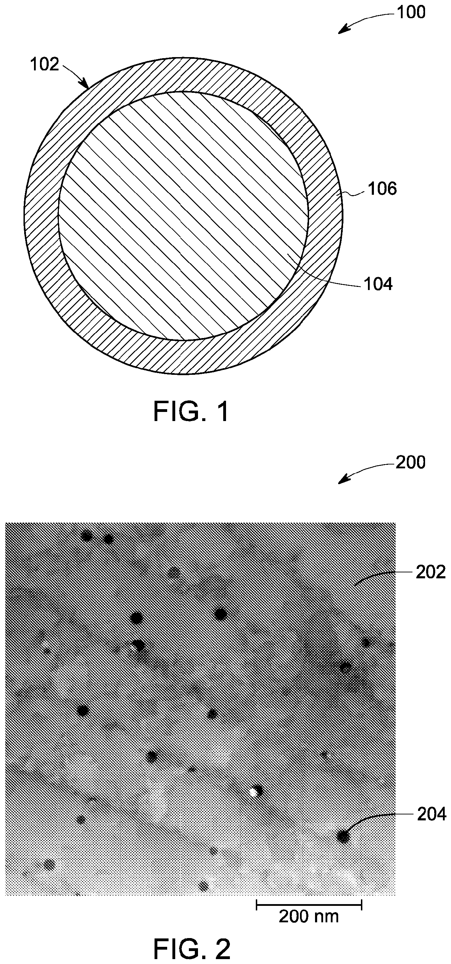

FIG. 1 illustrates a schematic representation of an example particle 100 of a core-shell structured alloy powder, where the particle 100 comprises a core-shell structure 102. A plurality of particles 100 forms the core-shell structured alloy powder of the present specification. Some or all the plurality of particles may have the core-shell structure 102. The example particle 100 includes an alloy powder core 104 and an oxygen or nitrogen rich shell 106 that at least partially surrounds the core 104. The core 104 of the core-shell structure 102 of the particle 100 is made of a material of a metal alloy based matrix and comprises reactive elements that react with oxygen, nitrogen, or both. The shell 106 comprises high concentration of oxygen, nitrogen, or both. The concentration of the reactive elements in the alloy powder is in a range from about 0.01 weight percent to 10 weight percent of a total weight of the alloy powder. The reactive elements present in the alloy powder form nano-sized precipitates of oxide, nitride, or both during additive manufacturing and post heat treatments. The concentration of the reactive elements in the alloy powder is based on desirable concentration of nano-sized precipitates in the resultant components.

In certain embodiments, an average size of the nano-sized oxide or nitride precipitates present in the precipitation dispersion strengthened alloys and components made of these alloys is in a range from about 0.5 nanometers to about 500 nanometers. The terms "precipitates" and "dispersoids" may be used interchangeably throughout the present specification. By way of example, the terms "nano-sized oxide or nitride precipitates" and "nano-sized oxide or nitride dispersoids" may be used interchangeably throughout the present specification. Shapes of the nano-sized precipitates depend on interfacial energies of the precipitates with respect to interfacial energies of the metal alloy based matrix. The nano-sized precipitates are typically spherical in shape. However, other shapes of the nano-sized precipitates are also envisioned within the purview of the present specification.

In some embodiments, the metal alloy based matrix is made of stainless steel or other iron based alloys, nickel based alloys, cobalt based alloys, copper based alloys, aluminum based alloys, titanium based alloys, and combinations thereof. Non-limiting examples of stainless steel include alloys, such as, but not limited to, austenitic stainless steel, ferritic stainless steel, duplex stainless steel, martensitic stainless steel, precipitation strengthened stainless steel, and the like, and combinations thereof. The metal alloy based matrix further comprises reactive elements including iron, chromium, nickel, aluminum, cobalt, carbon, molybdenum, manganese, magnesium, silicon, copper, nitrogen, niobium, titanium, refractory metals, tantalum, hafnium, yttrium, vanadium, tungsten, zirconium, boron, and combinations thereof. In particular, oxygen reactive elements comprise yttrium, aluminum, silicon, hafnium, titanium, zirconium, manganese, magnesium, and combinations thereof, and nitrogen reactive elements comprise aluminum, titanium, refractory metals, zirconium, hafnium, chromium, silicon, vanadium, boron, and combinations thereof. In addition to the reactive elements, one or more transition metals including iron, chromium, nickel, aluminum, cobalt, carbon, molybdenum, manganese, silicon, copper, niobium, titanium, tantalum, hafnium, yttrium, vanadium, tungsten, zirconium, boron, and combinations thereof may also be present in the metal alloy based matrix.

Non-limiting examples of the nano-sized oxide precipitates comprise yttrium oxide, aluminum oxide, silicon oxide, hafnium oxide, titanium oxide, zirconium oxide, manganese oxide, magnesium oxide, and combinations thereof. Non-limiting examples of the nano-sized nitride precipitates include aluminum nitride, titanium nitride, refractory metal nitrides, zirconium nitride, hafnium nitride, chromium nitride, silicon nitride, vanadium nitride, boron nitride, and combinations thereof. Transition metals, such as iron, chromium, nickel, aluminum, cobalt, carbon, molybdenum, tungsten, manganese, silicon, copper, nitrogen, niobium, titanium, tantalum, and combinations thereof present in the metal alloy based matrix may also participate in the formation of nano-oxide precipitates or nanofeatures. Consequently, resultant oxide and nitride precipitation dispersion strengthened alloys may comprise nano-sized oxide or nitride precipitates of reactive elements as well as nano-sized oxide or nitride precipitates of more than one of these transition metals. In one example, yttrium and titanium may be used to form an oxide dispersion strengthened (ODS) stainless steel, with transition metals manganese and molybdenum present in the stainless steel. The resultant precipitation dispersion strengthened alloy may comprise nano-sized oxide precipitates of yttrium and titanium oxides with chemistry doping of manganese and molybdenum oxides of the transition metals.

The nano-sized precipitates of oxide, nitride, or both are uniformly distributed with high density in the metal alloy based matrix. Uniform distribution of the nano-sized precipitates in the metal alloy based matrix results in enhanced material properties of the alloy and the resultant component, such as, but not limited to, yield strength, tensile strength, corrosion resistance, crack resistance, creep resistance, high temperature mechanical properties, enhanced irradiation damage tolerance, and combinations thereof. Specifically, enhanced irradiation damage tolerance is desirable and useful in nuclear environment. In some embodiments, the oxide or nitride dispersion strengthened metal based alloys having nano-sized precipitates may be used in power generation applications, aerospace applications, automotive applications, medical fields, and the like. In certain embodiments, a volume fraction of the nano-sized precipitates in the precipitation dispersion strengthened alloys is in a range from 0.1 percent to 40 percent. Advantageously, additive manufacturing of the precipitation strengthened alloys of the present specification allows shorter manufacturing times as compared to manufacturing time required in conventional or existing processes that include ball milling, and similar time consuming processes. Further, nano-size of the *in-situ* formed precipitates of the oxides, nitrides, or both formed during the laser powder bed process enhances mechanical properties of the resultant oxide or nitride dispersion strengthened alloys. In certain embodiments, the oxide or nitride dispersed alloys so formed exhibit enhanced high temperature mechanical properties.

In certain embodiments, during the melting and solidification processes of the laser or electron beam powder bed additive manufacturing, the nano-sized oxide or nitride precipitates are formed *in-situ* by reactions between oxygen and/or nitrogen content that is present in a powder surface layer (shell) and the reactive elements present in the alloy powder core. Non-limiting examples of the laser beam powder bed additive manufacturing include direct one or more of direct metal laser sintering (DMLS), selective laser melting (SLM), and selective laser sintering (SLS). The laser or electron beam process parameters are selected to control size and distribution of the nano-sized oxide and/or nitride precipitates.

In some embodiments, processing includes subjecting the additively manufactured metal component to one or more post heat treatments to optimize the grain microstructure of the metal and control stability, size, distribution, and density of the nano-sized oxide or nitride precipitates to produce stable, nanoscale, and uniformly distributed nano-sized precipitates. In certain embodiments, the nano-sized oxide or nitride precipitates are distributed intragranularly, intergranularly, or both in the metal alloy based matrix. During the one or more heat treatments, oxides and nitrides of the reactive elements are formed selectively. In some embodiments, the one or more heat treatments may include the whole component furnace heat treatment, local heat treatment including surface heating, laser heating, electron beam heating, and the like.

It should be noted that formation of the nano-sized oxide or nitride precipitates in a desired manner depends on a chemistry of the core-shell structured alloy powder, such as a concentration of reactive elements, an amount of oxygen, an amount of nitrogen, laser process parameters, electron beam parameters, post heat treatment parameters, or combinations thereof.

In certain embodiments, the core-shell structured alloy powders having determined alloy chemistry (for example, concentrations of reactive elements, oxygen, and nitrogen) are used as precursor powders for additive manufacturing. The alloy powders may be produced by commercial gas atomization process. Nano-sized oxide or nitride precipitates may be formed by *in-situ* oxidation, nitridation, respectively, of the reactive elements during the laser or electron beam additive manufacturing as well as during post heat treatments. High cooling rates used during the laser and electron beam additive manufacturing facilitate formation of oxides and nitrides that have nano-sized features and are stable in the metal alloy based matrix.

In contrast to conventional mechanical ball milling processes that are typically used for producing ODS alloys, present specification uses additive manufacturing to make precipitation dispersion strengthened alloys and components using such alloys. Advantageously, the methods and components of the present specification are produced in a time efficient and cost productive manner. The present specification provides a successful method of making components from precipitation dispersion strengthened alloys using additive manufacturing, where the component comprises precipitates of nano-sized oxides, nitrides, or both. Due to various advantages associated with the additive manufacturing processes there have been a long-felt need to make metal alloy components using additive manufacturing, however several attempts in the past for making components using additive manufacturing while retaining size of the precipitates in the nano-size range have not been successful. In the art, oxides or nitrides pre-existing in the starting powder are prone to undesirable coarsening, agglomeration, and non-uniform distribution. In contrast, the nano-sized precipitates present in the precipitation dispersion strengthened alloys and components of the present specification are chemically and microstructurally immutable using *in-situ* in-process reaction to form the nano-sized precipitates. Methods of the present specification eliminate the need for the presence of oxides or nitrides in the precursor alloy mixtures used for making alloys and components using additive manufacturing. In particular, methods of the present specification are designed to form oxides or nitrides *in-situ* and in process during deposition for powder bed additive manufacturing or post deposition, for example, by heat treatments following additive manufacturing.

Generally, oxygen or nitrogen contamination is considered undesirable for precursor powders for laser or electron beam additive manufacturing processes. Accordingly, oxygen and nitrogen contamination is prevented during powder gas atomization of such precursor powders for additive manufacturing. In the present specification, oxygen, nitrogen, or both are advertently mixed in determined amounts to assist in the precipitation of nano-sized precipitates during laser or electron beam additive manufacturing.

FIG. 2 shows a transmission electron image of an oxide dispersion strengthened (ODS) austenitic stainless steel 200 having silicon oxide precipitates as nano-oxide precipitates. The oxide dispersion strengthened austenitic stainless steel is fabricated using laser powder bed additive manufacturing. The ODS stainless steel 200 has a stainless steel based matrix 202 having nano-sized silicon oxide precipitates 204 dispersed in the matrix 202. The nano-sized silicon oxide precipitates 204 are uniformly distributed throughout the metal alloy based matrix 202.

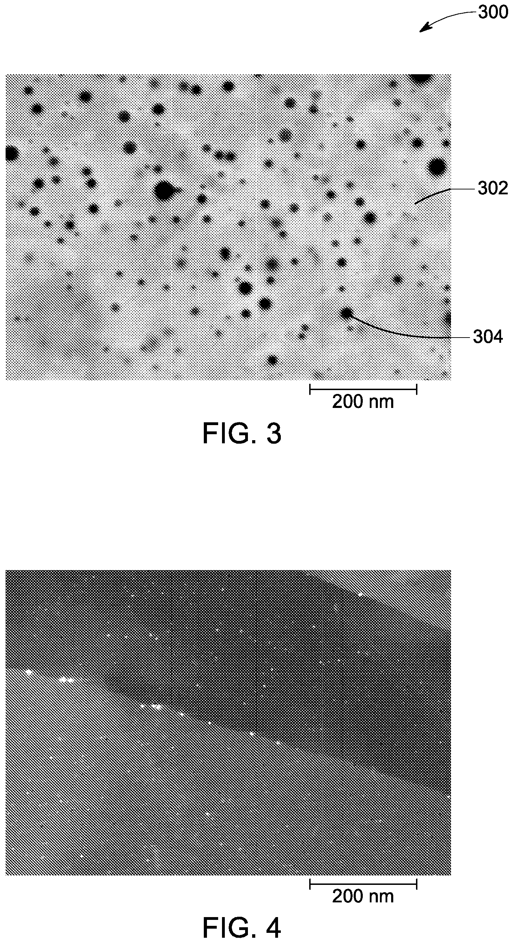

FIG. 3 shows a backscattered electron image of an ODS austenitic stainless steel 300 having yttrium and titanium rich oxide precipitates as nano-oxide precipitates. The ODS austenitic stainless steel 300 is fabricated using laser powder bed additive manufacturing. The ODS stainless steel 300 has a stainless steel based matrix 302 and nano-sized yttrium and hafnium oxide precipitates 304 dispersed in the matrix 302. The nano-sized yttrium and hafnium oxide precipitates 304 are uniformly distributed throughout the metal alloy based matrix 302.

FIG. 4 shows a backscattered electron image of an oxide dispersion strengthened austenitic stainless steel with titanium, yttrium, and hafnium oxide precipitates as nano oxide precipitates. In the illustrated embodiment, post heat treatment is applied to the oxide dispersion strengthened austenitic stainless steel. Nano-sized oxides are formed intragranularly and intergranularly in this oxide dispersion strengthened austenitic stainless steel.

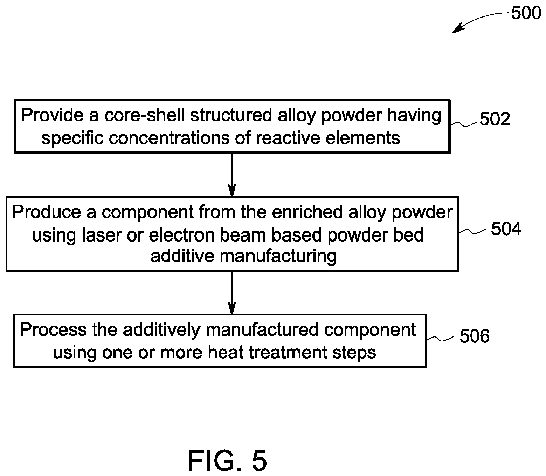

FIG. 5 illustrates a flow chart 500 of an example method of making a precipitation dispersion strengthened alloy, such as an oxide precipitation dispersion strengthened alloy, a nitride precipitation dispersion strengthened alloy, or both. At block 502, a core-shell structured alloy powder having specific concentrations of reactive elements is provided. In certain embodiments, the core-shell structured alloy powder is produced by gas atomization process and sieved to obtain a determined particle size distribution. In one embodiment, the particle size distribution may be about -325M/+15 micrometers. A weight percent of reactive elements in the alloy powder is in the range of 0.01weight percent to 10 weight percent.

In certain embodiments, the reactive elements include oxygen reactive elements, nitrogen reactive elements, or both. Non-limiting examples of the reactive elements include metal elements, such as, but not limited to, yttrium, aluminum, silicon, hafnium, titanium, zirconium, magnesium, manganese, refractory metals, boron, chromium, vanadium, and combinations thereof. In addition to the reactive elements, the alloy powder may also include transition metals. In some embodiments, the oxygen or nitrogen reactive elements may be elements that can easily react with oxygen or nitrogen, respectively to form nano-sized oxides or nitrides, respectively. The reactive elements have relatively high negative free energy change to form oxides and/or nitrides. Therefore, reactive metal elements have a higher tendency to react with oxygen or nitrogen in the metal powder or atmosphere to form stable oxide or nitride precipitates or both, as compared to other elements present in the metal alloy based matrix. The oxygen reactive metal elements comprise yttrium, aluminum, silicon, hafnium, titanium, zirconium, magnesium, and combinations thereof. The nitrogen reactive metal elements comprise aluminum, titanium, refractory metals, boron, zirconium, hafnium, chromium, silicon, vanadium, and combinations thereof.

In some embodiments, providing the core-shell structured alloy powder comprises providing a precursor alloy melt having an alloy constituent matrix and reactive elements. In certain embodiments, the precursor alloy melt comprises one or more of iron, chromium, nickel, aluminum, cobalt, carbon, molybdenum, manganese, copper, nitrogen, niobium, titanium, tantalum, hafnium, yttrium, vanadium, tungsten, zirconium, carbon, boron, silicon and combinations thereof. Further, the precursor alloy melt comprises one or more reactive elements in a range from about 0.01 weight percent to 10 weight percent of a total weight of the alloy powder.

The precursor alloy melt is subjected to gas atomization to form the alloy powder core comprising the alloy constituent matrix. An oxygen or nitrogen rich shell is introduced on at least a portion of the alloy powder core during or after gas atomization to form the core-shell structured alloy powder. In certain embodiments, the alloy powder for use in additive manufacturing process is enriched with oxygen, nitrogen, or both on a powder surface. In some embodiments, a desired level of oxygen or nitrogen as a surface layer on the metal powder may be introduced by powder gas atomization under a stream of inert gas (e.g. argon or nitrogen) having 0.1 volume percent to about 20 volume percent of oxygen, or under a stream of inert gas (e.g. argon) having 0. 1 volume percent to about 100 volume percent of nitrogen containing gas such as nitrogen and ammonia. In some other embodiments, a desired level of oxygen, nitrogen, or both may also be introduced by post oxidization or nitridation of the alloy powder in a controlled oxygen atmosphere, nitrogen atmosphere, atmosphere of nitrogen containing gases (such as, but not limited to, ammonia), or combinations thereof after gas atomization process. In certain embodiments, oxygen or nitrogen may also be introduced by coating an oxygen or nitrogen rich layer on the powder using fluidized bed powder coating process. Depending on the selected reactive metal elements, resultant oxygen, nitrogen, or combined oxygen and nitrogen concentration in the core-shell structured alloy powder may be in the range from about 100 ppm to about 5000 ppm.

The oxygen or nitrogen rich shell may be introduced on the alloy powder core in various ways. In one embodiment, introducing the oxygen rich shell comprises providing powder gas atomization under a stream of inert gas having an oxygen concentration in a range from about 0.1 volume percent to 20 volume percent. In another embodiment, introducing the oxygen rich shell comprises performing post oxidization of the precursor alloy powder in a controlled oxygen atmosphere after gas atomization process. In yet another embodiment, introducing the oxygen rich shell comprises coating an oxygen rich layer on at least a portion of the precursor alloy powder using a fluidized bed powder coating process.

In one embodiment, introducing the nitrogen rich shell comprises providing powder gas atomization under a stream of inert gas having nitrogen, nitrogen containing gases, or both in a range from about 0.1 volume percent to 100 volume percent. In another embodiment, introducing the nitrogen rich shell comprises performing post nitridation of the precursor alloy powder in a controlled atmosphere after gas atomization process, where the controlled atmosphere comprises nitrogen, nitrogen containing gases, or both. In yet another embodiment, introducing the nitrogen rich shell comprises coating a nitrogen rich shell on at least a portion of the alloy powder using a fluidized bed powder coating process.

At block 504, the alloy powder is used to produce a metal alloy component using laser or electron beam based powder bed additive manufacturing. In some embodiments, in addition to the reactive elements, transitional metals present inherently in the alloy powder may from oxides, nitrides, or both during additive manufacturing and post treatment. Laser or electron beam based powder bed fusion additive manufacturing uses laser or electron beam as a heat source to melt the metal powder layer by layer in a specific pattern to create a three-dimensional geometry. Laser or electron beam and the layer of powders are controlled by computer software and automated machine. The additive manufacturing may be performed in a controlled atmosphere comprising a determined concentration of oxygen, nitrogen, nitrogen containing gases, or combinations thereof.

The controlled atmosphere comprises a protection shield gas. In one embodiment, the protection shield gas comprises a mixture of argon, helium, nitrogen, or combinations thereof and up to about 20 volume percent of oxygen. In another embodiment, the protection shield gas comprises a mixture of argon, helium, or both and up to about 100 volume percent of nitrogen, up to about 100 volume percent of nitrogen containing gases, or both.

The laser or electron beam process parameters are set to promote *in-situ* uniform formation of nano-sized precipitates in the metal alloy based matrix. Non-limiting examples of these parameters may include, but are not limited to, an energy output of the laser or electron beam, a hatch spacing, a thickness of a deposited layer, a scan speed of the laser or electron beam, the protection shield gas flow, an amount of oxygen, an amount of nitrogen, an amount or concentration of reactive elements, a scan strategy or scan pattern, and the like, and combinations thereof. It may be appreciated that these parameters may be interdependent and may vary based on the nature of metal alloy based matrix and reactive elements. In one embodiment, a protection shield gas with a determined oxygen concentration may also be used to promote internal oxidation or nitridation of the precipitates. The concentration of oxygen in the protection shield gas may be up to about 20 volume percent. For nitride strengthened alloys, the protection shield gas comprises a mixture of argon and/or helium and up to 100 volume percent of nitrogen and/or up to 100 volume percent of ammonia.

Laser or electron beam processes have extremely fast heating and cooling rates during metal melting. This fast solidification process by laser or electron melting facilitates the formation of nano-sized precipitates during additive manufacturing. By controlling the laser or electron beam solidification heating/cooling rates, and one or more of a size distribution, particle spatial distribution in the alloy matrix, and a volume density of the nano-sized oxide or nitride precipitates may be optimized for alloys. For example, if the solidification is too fast, then reactive elements in the metal powder may not have enough reaction time to combine with pre-doped oxygen or nitride to form high density nano-sized oxide/nitride precipitates. Fast solidification may also lead to cracks and porosity in the component. However, by further example, if the scan speed is too slow, then the oxide/nitride precipitates may grow larger, which may adversely affect the function of strengthening provided by these precipitates. The heating/cooling rate of the additive manufacturing process is controlled by a combination of energy output of the laser or electron beam, the hatch spacing, the thickness of the deposited layer, the scan speed, shield gas flow, scan strategy/pattern, layer thickness and the like. In certain embodiments, it is presently recognized that a specifically designed laser or electron beam parameters may be desirable to the oxidation or nitridation of a certain reactive metal element. The laser or electron beam power, scan speed in combination with the other parameters of the laser or electron beam powder bed additive manufacturing process may be controlled to produce a desired size, volume density, and distribution of the nano-sized oxide or nitride precipitates.

In one example, to enable a desired average size and density of nano-sized oxide precipitate in the metal alloy based matrix, an output energy of the laser may be selected in the range of 100 watts to 800 watts. The hatch spacing may be a function of melt pool dimensions and influenced by the energy output and scan speed of the laser. For example, in some embodiments, the hatch spacing may be in the range of between 30 micrometers to 500 micrometers. Further, in some embodiments, the layer thickness may be in the range of 10 micrometers to 100 micrometers. The scan speed of the laser is a speed at which the laser moves over the layer of metal powder. In some embodiments, the scan speed may be in the range of 0.1 meters per second (m/s) to 5 m/s. In one example, the scan speed if about 0.6 m/s.

Further, during additive manufacturing, oxygen, or nitrogen, or ammonia rich gases may be selected as the protection shield gas based on desirable properties in the precipitation strengthened alloys. The concentration of oxygen in the protection shield gas can be in the range from 0 volume percent to 20 volume percent oxygen gas. The oxygen in the shield gas provides further assistance to oxidize the reactive metal element in the metal powder during laser powder bed additive manufacturing. The concentration of nitrogen or nitrogen containing gases (such as, but not limited to, ammonia) in the protection shield gas may be up to 100 volume percent. Presence of nitrogen or ammonia in the protection shield gas provides further assistance to the nitridation of the nitrogen reactive metal elements in the metal powder during laser powder bed or electron beam additive manufacturing.

At block 506, after laser or electron beam additive manufacturing to define a shape of the component, the produce is further processed using one or more steps of heat treatment and/or hot isostatic pressing to further optimize the size, volume density and distribution of the nano-sized oxide/nitride precipitates in the metal alloy based matrix and the material microstructure. Different types of heating sources may be used for the heat treatment, such as, but not limited to, furnace heating, laser heating, ultrasonic heating, microwave heating, induction heating, and plasma heating. The heat treatment may also include hot isostatic pressing to consolidate the component. In some embodiments, heat treatment of the metal component may be based on furnace heating. In other embodiments, the heat treatment may also be done using other heating sources by laser, ultrasonic, microwave, induction, and plasma. For certain metals, such as austenitic stainless steel alloys, the heat treatment (or hot isostatic pressing) temperature parameter may be in the range of 1000 degrees Fahrenheit (°F) to 2300°F, and the heat treatment (or hot isostatic pressing) time parameter may be in the range of 0.1 hours to 100 hours. The heat treatment may be performed in air or inert gas atmosphere. Further, water or oil quench may also be used for the heat treatment.

Quality and properties of alloys of the present specification may be based on oxygen or nitrogen rich metal alloy powder, parameters used for the additive manufacturing of the metal alloy component, and the heat treatment and/or hot isostatic pressing of the metal alloy based matrix. Non-limiting examples of the parameters of the starting oxygen or nitrogen rich metal alloy based powder may include, type of reactive elements, concentration of reactive elements, composition of base alloy matrix, shape and the powder particles, grain size of the powder particles, size distribution of the powder particles, and the like.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A method for additively manufacturing a precipitation dispersion strengthened alloy component by laser or electron beam-based process comprising nano-sized precipitates of oxides, nitrides or both dispersed in a metal alloy based matrix, the method comprising:
providing a core-shell structured alloy powder comprising a plurality of particles, wherein one or more of the plurality of particles comprise:
an alloy powder core having an alloy constituent matrix with one or more reactive elements, wherein the one or more reactive elements are configured to react with oxygen, nitrogen, or both so as to form nano-sized precipitates of an oxide, a nitride, or both in the alloy constituent matrix; and
an oxygen or nitrogen rich shell disposed on at least a portion of the alloy powder core,
wherein the alloy constituent matrix comprises stainless steel, an iron based alloy, a nickel based alloy, a nickel-iron based alloy, a cobalt based alloy, a copper based alloy, an aluminum based alloy, a titanium based alloy, or combinations thereof, and
wherein the alloy constituent matrix comprises the one or more reactive elements present in a range from about 0.01 weight percent to 10 weight percent of a total weight of the alloy powder producing the precipitation dispersion strengthened alloy component from the core-shell structured alloy powder using the laser or electron beam-based powder bed additive manufacturing; and
processing the precipitation dispersion strengthened alloy component using one or more heat treatment steps.

2. The method of claim 1, comprising using the laser or electron beam-based powder bed additive manufacturing in a controlled gas atmosphere, wherein the controlled atmosphere comprises a determined concentration of oxygen, nitrogen, nitrogen containing gases, or combinations thereof.

3. The method of claim 2, wherein the controlled atmosphere comprises a protection shield gas, and wherein the protection shield gas comprises a mixture of argon, helium, nitrogen, or combinations thereof and up to about 20 volume percent of oxygen.

4. The method of claim 2, wherein the controlled atmosphere comprises a protection shield gas, and wherein the protection shield gas comprises a mixture of argon, helium, or both and up to about 100 volume percent of nitrogen, up to about 100 volume percent of nitrogen containing gases, or both.

## Patentansprüche

1. Ein Verfahren zur additiven Herstellung einer fällungsverstärkten Legierungskomponente durch Laser- oder Elektronenstrahlverfahren, das nanogroße Ausscheidungen von Oxiden, Nitriden oder beides in einer auf Metalllegierung basierenden Matrix umfasst, wobei das Verfahren Folgendes umfasst:
Bereitstellung eines strukturierten Legierungspulvers mit Kernschalen, das eine Vielzahl von Partikeln umfasst, wobei eines oder mehrere der Teilchenmehrheit Folgendes umfassen:
Legierungspulverkern mit einer Legierungsbestandteilmatrix mit einem oder mehreren reaktiven Elementen, wobei die ein oder mehrere reaktive Elemente so konfiguriert sind, dass sie mit Sauerstoff, Stickstoff oder beidem so reagieren, dass sie nanogroße Ausscheidungen eines Oxids, eines Nitrids oder beides in der Legierungsbestandteilmatrix bilden; und
eine sauerstoff- oder stickstoffreiche Schale, die auf mindestens einem Teil des Legierungspulverkerns entsorgt ist,
wobei die Legierungsbestandteilmatrix aus rostfreiem Stahl, einer Legierung auf Eisenbasis, einer Legierung auf Nickelbasis, einer Legierung auf Nickel-Eisenbasis, einer Legierung auf Kobaltbasis, einer Legierung auf Kupferbasis, einer Aluminiumlegierung, einer Titanlegierung oder Kombinationen davon besteht und
wobei die Legierungsbestandteilmatrix die eines oder mehrere reaktive Elemente umfasst, die in einem Bereich von etwa 0,01 Gewichtsprozent bis 10 Gewichtsprozent eines Gesamtgewichts des Legierungspulvers vorhanden sind, das die Niederschlagsdispersion verstärkt Legierungskomponente aus dem Kern-Schalen strukturierten Legierungspulver unter Verwendung der Laser- oder Elektronenstrahl-basierten Pulverbett-additive Fertigung erzeugt; und
Verarbeitung der Fällungsdispersion verstärkt Legierungskomponente mit einem oder mehreren Wärmebehandlungsschritten.

2. Das Verfahren nach Anspruch 1, das die additive Fertigung auf Laser- oder Elektronenstrahlbasis in einer kontrollierten Gasatmosphäre umfasst, wobei die kontrollierte Atmosphäre eine festgelegte Konzentration von Sauerstoff, Stickstoff, stickstoffhaltigen Gasen oder Kombinationen davon umfasst.

3. Das Verfahren nach Anspruch 2, wobei die kontrollierte Atmosphäre ein Schutzschildgas umfasst und wobei das Schutzschildgas ein Gemisch aus Argon, Helium, Stickstoff oder Kombinationen davon und bis zu etwa 20 Volumenprozent Sauerstoff umfasst.

4. Das Verfahren nach Anspruch 2, wobei die kontrollierte Atmosphäre ein Schutzschildgas umfasst und wobei das Schutzschildgas ein Gemisch aus Argon, Helium oder beidem und bis zu etwa 100 Volumenprozent Stickstoff, bis zu etwa 100 Volumenprozent Stickstoff enthält, oder beides.

## Revendications

1. Une méthode de fabrication additive d'un composant d'alliage renforcé par dispersion de précipitations par procédé laser ou par faisceau d'électrons comprenant des précipités nanométriques d'oxydes, de nitrides ou des deux dispersés dans une matrice à base d'alliages métalliques, la méthode comprenant:
fourniture d'une poudre d'alliage structuré à coque centrale comprenant une pluralité de particules, dans laquelle une ou plusieurs de la pluralité de particules comprennent: un noyau de poudre d'alliage ayant une matrice de constituants d'alliage avec un ou plusieurs éléments réactifs, dans lequel un ou plusieurs éléments réactifs sont configurés pour réagir avec l'oxygène, l'azote, ou les deux de façon à former des précipités nanométriques d'un oxyde, d'un nitrure ou des deux dans la matrice des constituants de l'alliage; et
une coquille riche en oxygène ou en azote éliminée sur au moins une partie du noyau en poudre de l'alliage,
dans laquelle la matrice des constituants de l'alliage se compose d'acier inoxydable, d'un alliage à base de fer, d'un alliage à base de nickel, d'un alliage à base de nickel, d'un alliage à base de cobalt, d'un alliage à base de cuivre, d'un alliage à base d'aluminium, d'un alliage à base de titane ou de combinaisons de ces éléments, et
dans laquelle la matrice des constituants de l'alliage comprend un ou plusieurs éléments réactifs présents dans une fourchette allant d'environ 0,01 % en poids à 10 % en poids d'un poids total de la poudre d'alliage produisant le composant d'alliage renforcé par dispersion de précipitation à partir de la poudre d'alliage structurée à la coque centrale en utilisant la fabrication additive par lit de poudre à base de faisceau laser ou de faisceau d'électrons; et
le traitement du composant d'alliage renforcé par dispersion des précipitations à l'aide d'une ou de plusieurs étapes de traitement thermique.

2. La méthode de la revendication 1, consistant à utiliser la fabrication additive par lit de poudre à base de faisceau laser ou d'électrons dans une atmosphère gazeuse contrôlée, dans laquelle l'atmosphère contrôlée comprend une concentration déterminée d'oxygène, d'azote, de gaz contenant de l'azote ou de combinaisons de gaz contenant de l'azote.

3. La méthode de la revendication 2, dans laquelle l'atmosphère contrôlée comprend un gaz de bouclier de protection, et dans laquelle le gaz de bouclier de protection comprend un mélange d'argon, d'hélium, d'azote ou de combinaisons de ces gaz et jusqu' à environ 20 % volume d'oxygène.

4. La méthode de la revendication 2, dans laquelle l'atmosphère contrôlée comprend un gaz de bouclier de protection, et dans laquelle le gaz de bouclier de protection comprend un mélange d'argon, d'hélium ou les deux et jusqu'à environ 100 % de volume d'azote, jusqu'à environ 100 % volume de gaz contenant de l'azote, ou les deux.
